# EUROPÄISCHE PATENTSCHRIFT

(11) **EP 2 052 886 B1**
(45) Veröffentlichungstag und Bekanntmachung des Hinweises auf die Patenterteilung: **30.05.2018**
(21) Anmeldenummer: 08018569.7
(22) Anmeldetag: 23.10.2008
(51) Int. Cl.: B60G 17/0165, B60G 17/018, B60G 17/06, B60W 40/10, B60W 40/02, B60W 10/22

(54) **Verfahren und System zur Beeinflussung der Bewegung eines in seinen Bewegungsabläufen steuerbaren oder regelbaren Fahrzeugaufbaus eines Kraftfahrzeuges und Fahrzeug**
Method and system for affecting the movement of a vehicle structure on a powered vehicle and vehicle controlled or regulated by its movement processes
Procédé et système destinés à influencer le mouvement d'une caisse d'un véhicule automobile ou d'un véhicule, pouvant être commandée ou réglée dans ses déroulements de mouvements

(30) Priorität: 26.10.2007 DE 102007051212
(43) Veröffentlichungstag der Anmeldung: 29.04.2009
(73) Patentinhaber: Volkswagen Aktiengesellschaft, 38440 Wolfsburg (DE)
(72) Erfinder: Arenz, Andrea, 38458 Velpke (DE)

(56) Entgegenhaltungen:
- EP-A2- 0 151 421
- EP-A2- 0 265 911
- EP-A2- 0 556 070
- DE-A1- 3 918 735
- DE-A1- 3 930 517
- DE-A1- 4 011 976
- US-A- 5 322 320
- US-A1- 2005 178 628
- US-B1- 6 412 788

## Beschreibung

Die Erfindung betrifft ein Verfahren zur Erzeugung von Signalen zur Beeinflussung der Bewegung eines in seinen Bewegungsabläufen steuerbaren oder regelbaren Fahrzeugaufbaus eines Kraftfahrzeuges, wobei sensorisch die Bewegung des Fahrzeugaufbaus ermittelt wird, die den ermittelten Sensorwerten entsprechenden Sensorsignale einem Dämpferregler zugeführt werden, der Dämpferregler wenigstens ein Steuersignal zur Ansteuerung von Aktuatoren, insbesondere von semiaktiven oder aktiven Dämpfern liefert, mittels denen die Bewegung des Fahrzeugaufbaus beeinflusst werden kann. Die Erfindung betrifft ferner ein System zur Durchführung des Verfahrens und ein Fahrzeug, insbesondere Kraftfahrzeug, mit einem System zur Beeinflussung der Bewegung eines in seinen Bewegungsabläufen steuerbaren oder regelbaren Fahrzeugaufbaus.
Verfahren und Systeme der gattungsgemäßen Art sind bekannt. So ist beispielsweise aus DE 39 18 735 A1 ein Verfahren und eine Vorrichtung zur Dämpfung von Bewegungsabläufen an Fahrwerken von Personen- und Nutzkraftfahrzeugen bekannt, bei denen aus einer sensorisch ermittelten Bewegung zweier Fahrzeugmassen mittels einer Signalverarbeitungsschaltung ein Steuersignal für einen steuerbaren, an den Fahrzeugmassen angreifenden Aktuator gebildet wird. Für eine komfortable und dennoch sichere Fahrwerkabstimmung ist vorgesehen, die sensorisch ermittelten Signale über eine der Signalverarbeitungsschaltung angehörenden Schaltungsanordnung mit frequenzabhängigem Übertragungsverhalten zu leiten. Hierdurch soll erreicht werden, dass aufgrund der frequenzabhängigen Verarbeitung der Sensorsignale keine statische Kennlinie für die Aktuatorsteuerung beziehungsweise Aktuatorregelung eingesetzt wird, sondern eine von dem Frequenzinhalt des Bewegungsablaufs abhängige Aktuatorsteuerung beziehungsweise Aktuatorregelung erfolgt. Hierdurch soll das Ziel eines möglichst hohen Fahrkomforts bei einer auch in Grenzbereichen des Fahrzustandes sicheren Auslegung des Fahrwerks erzielt werden. Diesem Ansatz liegt der Gedanke zugrunde, dass dem Zielkonflikt zwischen gewünschtem Fahrkomfort, das heißt komfortable und weiche Auslegung, und Fahrdynamik, das heißt sportliche und straffe Abstimmung, einerseits und einer ausreichenden Fahrsicherheit andererseits entsprochen werden soll. Für Fahrkomfort und Fahrdynamik ist eine Dämpfung der Bewegung des Aufbaus entscheidend, während für eine Fahrsicherheit eine Radlast beziehungsweise Radlastschwankung entscheidend ist.

Aus DE 39 30 517 ist eine Vorrichtung zur fahrbahnabhängigen Fahrwerksregelung eines Fahrzeuges mit den dynamischen Fahrzustand erfassenden Sensoren bekannt. Die Sensorsignale werden einer Auswerteschaltung zugeführt, die ein für die Fahrbahnunebenheit charakteristisches Signal erzeugt und mit einer Federanordnung des Fahrzeuges zusammenwirkenden Aktuatoren steuert. Hierbei wird für jedes Rad der Momentanwert der dort vorliegenden Fahrbahnunebenheit und/oder Fahrbahnunebenheitsgeschwindigkeit aus den Daten der in jedem Radbereich angeordneten Sensoren ermittelt und einen jedem Rad zugehörigen Regelkreis als aktuelle Größe zugeführt.

US 5 322 320 A, US 2005/178628 A und EP 0 556 070 A offenbaren weitere relevante Verfahren und Systeme zur Beeinflussung der Bewegung eines Fahrzeugaufbaus eines Kraftfahrzeuges. Bekannt sind im Wesentlichen drei Dämpfersysteme für Fahrzeuge, wobei einer Federanordnung zwischen Rad und Aufbau ein Aktuator parallel geschaltet ist. Bekannt sind passive, semi-aktive und aktive Dämpfersysteme. Bei passiven Dämpfersystemen ist eine Veränderung der Dämpferkraft während des Fahrbetriebes nicht vorgesehen. Bei semi-aktiven Dämpfersystemen kann die Dämpferkraft durch eine Veränderung eines Ölfluidstromes unter Verwendung eines oder mehrerer Ventile verändert werden. Auf diese Art und Weise können die Dämpfungseigenschaften verändert werden. Semi-aktive Dämpfersysteme arbeiten rein energieabsorbierend. Bei aktiven Dämpfersystemen kann eine gewünschte Dämpferkraft sowohl dämpfend als auch energieeinbringend in jede Richtung bereitgestellt werden.
Fahrzeugschwingungen treten sowohl im stationären als auch im instationären Betrieb eines Fahrzeugs auf. Neben der aktiven und passiven Sicherheitsbeeinflussung eines Fahrzeugs bestimmen Schwingungen auch den Fahrkomfort. Da die Art der Schwingungen die Analysemethode wesentlich beeinflusst, sind Schwingungen in Sinne der Erfindung wie folgt definiert:
Schwingungen stellen sich wiederholende Prozesse dar. In der Regel werden instationäre, dass heißt sich zeitlich verändernde, Signale gemessen. Sich ausprägende Schwingungen können grundsätzlich in deterministische und regellose (nicht deterministische) unterteilt werden, wobei die natürliche Bewegungsform regellos ist. Dass heißt, dass die Anregungen während der Fahrt, wie Straßenunebenheiten, Seitenwind, und so weiter, stochastisch (analytisch nicht beschreibbar) auftreten. Stochastik ist die Betrachtung der analytischen Statistik entsprechend der Wahrscheinlichkeitstheorie. Man unterscheidet die deskriptive (beschreibende) Statistik, die Zustände an Hand von Beobachtungsdaten dokumentiert, und die induktive (analytische), bei der aufgrund von Beobachtungsdaten auf allgemeine Gesetzmäßigkeiten geschlossen wird. Straßenunebenheiten sind in der Regel nicht deterministisch; lediglich Abschnitte wie Kanaldeckel (Rechtecke), Unebenheiten im Ampelbereich (Sinus) können analytisch beschrieben werden. Bei diesen unterteilt man ferner zwischen periodischen und nicht periodischen. Periodische Signale besitzen die allgemeine Form x(t) und weisen eine feste Grundkreisfrequenz Omega auf. Sie sind mit Hilfe der Fourierreihe darstellbar, dass heißt sie sind aus einer Reihe von Sinusfunktionen zusammensetzbar (so ist auch ein Rechtecksignal beschreibbar). Harmonische im Gegensatz zu nicht harmonischen Signale sind periodische Signale der Form x(t)=sin(Omega x t) und zeichnen sich durch ein diskretes Frequenzspektrum mit einer Frequenz aus. Nicht periodische Signale sind entweder transient oder fast periodisch, wobei letztgenannte eine modulierte Schwingung mit zeitlich veränderlicher Amplitude aufweisen. Die Beschreibung im Frequenzbereich ist durch die Fouriertransformation möglich.

Die Standard-Straßenunebenheit weißt einen stochastischen, dass heißt regellos, nicht vorhersehbaren Charakter auf. Der Prozess wird durch unendlich viele Zufallsvariable beschrieben, die Zeitfunktionen sind. Hierbei unterscheidet man zwischen stationären und nicht stationären Vorgängen. Der stochastische Prozess heißt stationär, wenn die Verteilungsfunktion zeitunabhängig ist. Weisen Prozesse einen Anfang und ein Ende auf, so sind sie instationär. Unter nicht stationär versteht man zeitabhängige Funktionen, wobei diese dynamisch sein können, dass heißt stark zeitabhängig, oder aber quasistationär, dass heißt zeitlich langsam veränderlich.

Einzelne, in der Regel plötzlich auftretende Einflüsse wie Schlaglöcher, Seitenwind oder ähnliches sowie auch stochastisch auftretende Ereignisse wie schlechte und wellige Straßen haben einen erheblichen Einfluss auf das Fahrverhalten eines Fahrzeugs und sollten dementsprechend auch bei einer Regelung der Fahrzeugbewegung Berücksichtigung finden.

Beim Stand der Technik wird in der Regel von einer stochastischen Straßenanregung ausgegangen und diese zum Beispiel in Form einer Kennzahl beschrieben. Dieser Wert wird dann zum Beispiel in nachfolgenden Regelungen verwendet. Dieser Wert bildet ein Signal, welches von der Bewegung des Rades abhängig ist. Dieses Signal wird dem Regler zur Verfügung gestellt und hat Einfluss auf Art und Verlauf der Regelung. Straßenanregungsarten wie Sprünge, Rampen, Einzelhindernisse (Gullydeckel, und so weiter) werden hierbei nicht weiter berücksichtigt. Sie stellen vielmehr Störungen dar, die sich im Wunschfall nicht in der Kennzahl wiederfinden sollen.

Auf Einzelereignisse wird somit nach dem Stand der Technik überhaupt nicht reagiert, was nicht nur zu einem geringeren Komfort führt, sondern bei sicherheitskritischeren Manövern auch zu unerwünschten Radlastschwankungen und somit geringerer Stabilität des Fahrzeugs führen kann.

Der Erfindung liegt daher die Aufgabe zugrunde, ein Verfahren und ein System der gattungsgemäßen Art anzugeben, mittels denen in einfacher und sicherer Weise eine Regelung der Bewegung eines Fahrzeugaufbaus mit elektronisch ansteuerbaren Aktuatoren (Dämpfern), wobei eine Erhöhung des Komforts und der Fahrsicherheit erzielbar ist.
Erfindungsgemäß wird diese Aufgabe durch ein Verfahren mit den im Anspruch 1 genannten Merkmalen gelöst. Dadurch, dass der Einfluss einer Straßenanregung berücksichtigt wird, wobei stochastische Ereignisse und einzelne Ereignisse aus der Straßenanregung erfasst und ausgewertet werden, und den stochastischen Ereignissen und Einzelereignissen entsprechende Signale in die Ermittlung des wenigstens einen Steuersignals einfließen, ist vorteilhaft möglich, Fahrkomfort, Fahrdynamik und Fahrsicherheit durch die Berücksichtigung der Einzelereignisse zu verbessern. Durch die Berücksichtigung der Einzelereignisse bei der Bereitstellung der Steuersignale für die Aktuatoren, das heißt also bei der Einstellung der Dämpfung der Bewegung des Fahrzeugaufbaus, wird neben den Komfortanforderungen eines Fahrzeugführers auch den dynamischen Fahrzuständen des Fahrzeuges insbesondere auch unter Berücksichtigung sicherheitskritischer Manöver Rechnung getragen.
Im Gegensatz zum Stand der Technik werden damit nicht nur stochastische, sondern auch Einzelereignisse hinsichtlich der Regelung der Fahrzeugbewegungen berücksichtigt. Dabei werden diese Größen nicht nur in Form eines die Regelung verstärkenden oder schwächenden Faktors angewendet sondern auch in zweckmäßiger Zusammensetzung der Regelung zugeführt und so für eine sinnvolle Behandlung in dieser Größen durch das Regelungssystem sorgen. Erfindungsgemäß werden die stochastischen und Einzelereignis-Größen (beispielhaft eA_ereign, eA_stoch, eR_ereig, eR_stoch) in Form von energetischen Zustandsgrößen ermittelt. Es wird zweckmäßigerweise aus der Lage, der Schwerkraft, der Geschwindigkeit und/oder der Beschleunigung der betreffenden Körper (Aufbau, Rad, Dämpfer und so weiter) sowohl die potentielle als auch die kinetische Energie dieser Körper bestimmt. Aus in diesen Größen ergeben sich dann die gewünschten energetischen Zustandsgrößen. Um die stochastischen und Einzelereignisse von den periodischen oder harmonischen Bewegungen der Körper zu unterscheiden können entsprechende Filter eingesetzt werden, die aufgrund der Dauer und der Art der herausgefilterten Frequenzen die Möglichkeit bieten, periodische, harmonische, stochastische oder Einzelereignisse voneinander zu unterscheiden.
Ferner ist in bevorzugter Ausgestaltung der Erfindung vorgesehen, die festgestellten energetischen Zustandsgrößen als Eingangsgrößen und/oder Ausgangsgrößen und/oder Entscheidergrößen für die nachfolgenden Regelungen zu verwenden. Die Zustandsgrößen können mit anderen Worten die Eingangsignale als auch die Ausgangssignale der nachfolgenden Regeleinrichtungen beeinflussen.

In weiterer bevorzugten Ausgestaltung der Erfindung ist vorgesehen, die stochastischen und die Einzelereignis-Größen für die einzelnen Körper (Aufbau, Rad, Dämpfer und so weiter) voneinander getrennt festzustellen. Auf diese Weise wird es möglich hinsichtlich der Regelung der einzelnen Körper angemessen zu reagieren, indem gezielt auf den eine hohe Energie aufweisenden Körper eingewirkt werden kann.

Es ist in weiterer bevorzugter Ausgestaltung der Erfindung vorgesehen, die Filter nicht nur zur Trennung und Erkennung der einzelnen Typen von Eingangsgrößen zu verwenden, sondern diese können auch zusätzlich die Funktion übernehmen, die erkannten Signale, zum Beispiel durch Verstärkung, Schwächung oder Phasenverschiebung, zu beeinflussen. Bevorzug ist dies für die Eigenfrequenzen des Aufbaus und/oder des Rades vorgesehen.

Darüber hinaus ist in bevorzugter Ausgestaltung der Erfindung vorgesehen, hinsichtlich der einzelnen Körper jeweils die ihm aufgrund seiner Eigenfrequenzen zugeordneten Signale zu berücksichtigen, so dass herausgefilterte Signale mit den Eigenfrequenzen des Rades an diesem wirksamen werden und herausgefilterte Signale mit der Eigenfrequenz des Aufbaus auf diesen Wirkung ausüben.

Um die bei dem Regelungssystem möglichen und notwendigen Einstellungen nicht zu unübersichtlich werden zu lassen, ist bevorzugt vorgesehen, dass die stochastischen und die Einzelereignis-Zustände der einzelnen Körper und/oder der einzelnen Frequenzbereiche zu einem Gesamtzustand zusammengefasst werden. Damit können beispielsweise stochastische und einzelne Ereignisse an einem der Körper durch eine einzige Einstellung berücksichtigt werden, wobei allerdings immer noch der Freiheitsgrad bleibt, wie groß anteilig die Wirkung der miteinander kombinierten Signale ist. Man kann also bei der Abstimmung der Regelung festlegen, welchen Anteil die miteinander zu kombinierenden Signale an den Gesamtsignal haben sollen.

Es sind aber auch andere Kombinationen der gewonnenen Einzelgrößen denkbar. So ist in weiterer bevorzugter Ausgestaltung der Erfindung vorgesehen, dass wählbare Ausführungen der Zusammenfassungen der stochastische und Einzelereignis-Zustände für eine oder mehrere nachgeschaltete Reglermodule wie Vertikal-, Längs. Querdynamik oder Endlagen oder dergleichen erfolgen.

Ferner ist in bevorzugter Ausgestaltung der Erfindung vorgesehen, die gewonnenen Zustandsgrößen oder miteinander kombinierten Zustandsgrößen mit Hilfe weiterer Eingangsgrößen zu korrigieren, wie beispielsweise Fahrzustand, Fahreraktivität, Fahrgeschwindigkeit, Fahrverhalten oder dergleichen. Die Korrektur kann dabei bevorzugt hinsichtlich der Eingangsgrößen und/oder der Ausgangsgrößen des nachgeschalteten Reglers geschehen.

Die Erfindung lässt sich zusammenfassend kurz wie folgt beschreiben. Es wird in Erweiterung zum Stand der Technik vorgeschlagen, beim Einfluss der Straßenanregung sowohl stochastische, als auch einzelne Ereignisse zu berücksichtigen. Grundlage für die Ermittlung der Straßenanregung kann eine energetische Zustandsgröße sein.

Es besteht nun die Möglichkeit zwei parallele Straßenzustandsgrößen zu erzeugen, eine die die Stochastik der Straße beschreibt und die andere, die die Einzelereignisse erfasst. In den meisten Fällen bietet es sich jedoch an, diese beiden Zustandsgrößen miteinander zu koppeln, so dass nur eine einzelne Zustandsgröße für nachfolgende Regler Verwendung findet. Bei der Ermittlung der Einzelereignisse ist es wichtig, dass die Zustandsgröße möglichst zeitnah vorliegt, so dass noch für das Ereignis selbst eine Änderung im Regelungsvorgang erfolgen kann. Stochastische Größen hingegen beschreiben mehr den Langzeiteinfluss der Straße.

Es wird nun vorgeschlagen, beide Zustandsgrößen über geeignete Filtermodule aus der energetischen Zustandsgröße zu ermitteln. Wobei hier vorteilhafterweise die gesamt Zustandsgröße, bestehend aus kinetischen und potentiellen Anteilen, Verwendung findet.

Auch hier ist es oft vorteilhaft weitergehend zu unterscheiden zwischen den energetischen Zuständen einzelner Körper wie beispielsweise des Aufbaus, der Räder oder der Dämpfer und ferner einzelne Frequenzbereiche wie den Aufbaueigenfrequenzbereich und den Radfrequenzbereich um diese speziell gewichten zu können.

Maximal ergeben sich so jeweils stochastisch- und ereignisgeprägte Zustandsgrößen für zum Beispiel Aufbau und Rad jeweils getrennt für Aufbau- und Radfrequenzbereich. In vielen Fällen ist es jedoch ausreichend für den Aufbau nur den Aufbaufrequenzbereich und für die Räder nur den Radfrequenzbereich zu verwenden, so dass vier Zustandsgrößen resultieren.

Um die Einstellung und den Abgleich der Regler zu erleichtern ist es zweckmäßig, dass diese energetischen Sub-Zustandsgrößen zu einer Größe zusammengefasst werden. Es besteht dabei die Möglichkeit bei der Kombination, unterschiedliche Ausprägungen für die einzelnen Reglermodule zu realisieren. Beispielsweise ist für die Vertikaldynamik vorteilhaft, mit erhöhtem Aufbaufrequenzanteil und damit erhöhter Energie beziehungsweise Bewegung eine größere Steuergröße zu fordern und mit erhöhtem Radfrequenzanteil diese Tendenz umzukehren. Im Ergebnis können somit die Fahrzeugkörper (zum Beispiel Aufbau, Rad) mit höherem Energieanteil stärker gedämpft werden. Bei der Quer- oder Längsdynamik hingegen ist vor allem der Radfrequenzbereich interessant. Hier soll für eine optimale Radlastschwankung weder zu viel noch zu wenig gedämpft werden, da zum einen ein möglichst großer Komfort erreicht werden soll, andererseits aber darauf zu achten ist, dass das Rad sicher auf der Straße liegt. Im Bereich der Endlagen hingegen sind sowohl Rad- als auch Aufbauanteile wichtig, da beide dazu führen können, dass Anschläge des Dämpfers erreicht werden. Bei der Zusammenfassung der Steuergrößen zu einer Gesamt-Reglerausgangsgröße zum Beispiel im Stromberechnungsmodul kann die energetische Zustandsgröße zur Ermittlung dienen, welche Reglermodulanforderung mit welchem Anteil durchgeschaltet wird. So wird man beispielsweise bei einer eine große Energie besitzenden Radbewegung den Anteil der Aufbaudämpfung auch dann nicht erhöhen, wenn dies aus Gründen des Komforts wünschenswert wäre, da in diesem Fall aus Gründen der Sicherheit einen guter Kontakt des Rades zur Straße wichtiger ist als der Komfort der Fahrzeuginsassen.

Es ist vorteilhaft, wenn die so ermittelten energetischen Zustandsgrößen zur Zustandsbewertung/-berücksichtigung in nachfolgenden Reglermodulen Verwendung finden, wobei dies in Form von Eingangsgrößen und/oder Ausgangsgrößen geschehen kann. Ferner können diese Größen für zustandsabhängige Entscheider oder Gewichter oder ähnliches genutzt werden oder aber Filtern vorgeschaltet werden.

In einer weiteren Ausprägung ist es möglich eine Korrektur der Zustandsgrößen über anderen Zustandsgrößen vorzunehmen. Beispielsweise können der Fahrzustand (wie Fahrzeuggeschwindigkeit) oder der Fahrereinfluss (zum Beispiel Komfort oder Sport oder aber sportliche oder ruhige Fahrweise) oder weitere Größen Verwendung finden, um die energetischen Zustandsgrößen entsprechend zu modifizieren. Die Korrektureinrichtung kann dabei am Moduleingang oder am Modul angeordnet sein. Die Korrektur kann auch integriert werden in die Filterung der Energien oder in die Kombinationseinheit.

Die Aufgabe wird ferner durch ein System zur Beeinflussung der Bewegung eines in seinen Bewegungsabläufen steuerbaren oder regelbaren Fahrzeugaufbaus eines Kraftfahrzeuges mit den in Anspruch 12 genannten Merkmalen gelöst. Dadurch, dass der Dämpferregler Regelungsmodule umfasst, mittels denen aus den Sensorsignalen stochastische Ereignisse und Einzelereignisse erfassbar sind, und die dem stochastische Ereignissen und/oder Einzelereignisse entsprechenden Signal bei der Ermittlung des wenigstens einen Steuersignals berücksichtigbar sind, ist vorteilhaft möglich, den Dämpferregler modular aufzubauen und in im Fahrzeug bestehende Systeme, beispielsweise in ein Steuergerät, in einfacher Art und Weise zu integrieren, wobei insbesondere aus Einzelereignissen resultierende Fahrzeuganregungen berücksichtigbar sind.

Weitere bevorzugte Ausgestaltungen ergeben sich aus den übrigen, in den Unteransprüchen genannten Merkmalen.

Die Erfindung wird nachfolgend in Ausführungsbeispielen anhand der zugehörigen Zeichnungen erläutert. Es zeigen:
- Figur 1: schematisch ein Kraftfahrzeug mit einer Dämpferregelung;
- Figur 2: eine Prinzipskizze eines Kraftfahrzeuges mit vertikalen Eck-Aufbaugeschwindigkeiten;
- Figur 3: eine Prinzipskizze eines Kraftfahrzeuges mit vertikalen Modal-Aufbaugeschwindigkeiten;
- Figur 4: eine Prinzipskizze eines Kraftfahrzeuges mit im Dämpfersystem angeordneten Sensoren und den resultierenden Rad-, Aufbau- und Dämpfergeschwindigkeiten;
- Figur 5: eine Grobstruktur der Funktionsmodule einer Dämpferregelung;
- Figur 6: ein Blockschaltbild eines Standardregelkreises;
- Figur 7: ein Blockschaltbild eines erweiterten Regelkreises;
- Figur 8: eine Kombination von stochastischen und Ereignis-Zustandsgrößen der Körper Aufbau und Rad zu einer energetischen Zustandsgröße für das Modul xx;
- Figur 9: eine Regelung mit einer Korrektur der Eingangsgröße über den energetischen Straßenzustand;
- Figur 10: eine Regelung mit einer Korrektur der Ausgangsgröße über den energetischen Straßenzustand;
- Figur 11: eine Korrektur der Filtereingangsgrößen über den energetischen Straßenzustand;
- Figur 12: ein Entscheidungsverfahren über den energetischen Straßenzustand zur Wahl der geeigneten Reglerausgangsgröße und
- Figur 13: eine Korrektur und Filterung der Eingangsgrößen;

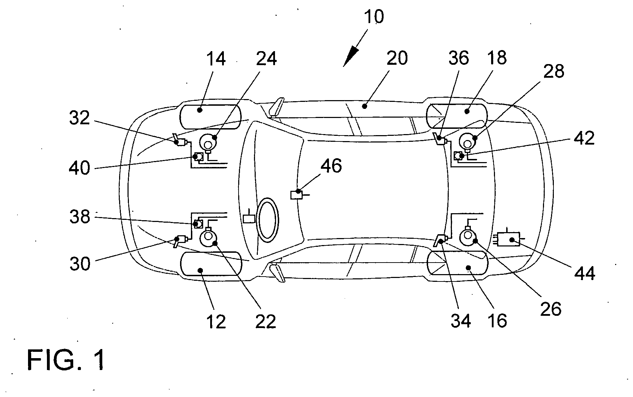

Figur 1 zeigt schematisch in Draufsicht ein insgesamt mit 10 bezeichnetes Kraftfahrzeug. Aufbau und Funktion von Kraftfahrzeugen sind allgemein bekannt, so dass im Rahmen der vorliegenden Beschreibung hierauf nicht näher eingegangen wird.

Das Kraftfahrzeug 10 besitzt vier Räder 12, 14, 16 und 18. Die Räder 12, 14, 16 und 18 sind über eine bekannte Radaufhängung an einem Aufbau 20 des Kraftfahrzeuges 10 befestigt. Unter Aufbau 20 wird im Rahmen der Erfindung allgemein die Fahrzeugkarosserie mit der Fahrgastzelle verstanden. Zwischen den Rädern 12, 14, 16 und 18 einerseits und dem Aufbau 20 ist jeweils ein Dämpfer 22, 24, 26 beziehungsweise 28 angeordnet. Die Dämpfer 22, 24, 26 und 28 sind parallel zu nicht dargestellten Federn angeordnet. Die Dämpfer 22, 24, 26 und 28 sind beispielsweise als semi-aktive Dämpfer ausgebildet, das heißt durch Anlegen eines Steuersignals an ein Stellmittel der Dämpfer kann die Dämpferkraft variiert werden. Das Stellmittel ist üblicher Weise als elektromagnetisches Ventil ausgebildet, so dass das Stellsignal ein Steuerstrom für das Ventil ist.

Jedem Rad beziehungsweise jedem.Dämpfer ist ein Wegsensor 30, 32, 34 beziehungsweise 36 zugeordnet. Die Wegsensoren sind als Relativwegsensoren ausgebildet, das heißt diese messen eine Veränderung des Abstandes des Aufbaus 20 von dem jeweiligen Rad 12, 14, 16 beziehungsweise 18. Typischerweise werden hier sogenannte Drehwinkel-Wegsensoren eingesetzt, deren Aufbau und Funktion allgemein bekannt sind.

Der Aufbau 20 umfasst ferner drei an definierten Punkten angeordnete Vertikalbeschleunigungssensoren 38, 40 und 42. Diese Beschleunigungssensoren 38, 40 und 42 sind fest an dem Aufbau 20 angeordnet und messen die Vertikalbeschleunigung des Aufbaus im Bereich der Räder 12, 14 beziehungsweise 18. Im Bereich des linken hinteren Rades 16 kann die Beschleunigung aus den drei anderen Beschleunigungssensoren rechnerisch ermittelt werden, so dass hier auf die Anordnung eines eigenen Beschleunigungssensors verzichtet werden kann.

Die Anordnung der Sensoren ist hier lediglich beispielhaft. Es können auch andere Sensoranordnungen, beispielsweise ein vertikaler Aufbaubeschleunigungssensor und zwei Drehwinkelsensoren oder dergleichen, zum Einsatz kommen.

Das Kraftfahrzeug 10 umfasst ferner ein Steuergerät 44, das über Signal- beziehungsweise Steuerleitungen mit den Stellmitteln der Dämpfer 22, 24, 26 und 28, den Wegsensoren 30, 32, 34 und 36 und den Beschleunigungssensoren 38, 40 und 42 verbunden ist. Das Steuergerät 44 übernimmt die nachfolgend noch näher zu erläuternde Dämpferregelung. Daneben kann das Steuergerät 44 selbstverständlich auch weitere, hier nicht zu betrachtende Funktionen innerhalb des Kraftfahrzeuges 10 übernehmen. Das Kraftfahrzeug 10 umfasst ferner ein Schaltmittel 46, beispielsweise einen Taster, ein Drehrad oder dergleichen, mittels dem von einem Fahrzeugführer eine Anforderung an die Bewegung des Aufbaus 20 gewählt werden kann. Hier kann beispielsweise zwischen der Anforderung "Komfort", der Anforderung "Sport" und der Anforderung "Basis" gewählt werden. Die Wahl ist entweder stufenförmig zwischen den drei Modi oder stufenlos mit entsprechenden Zwischenmodi möglich.

Das Schaltmittel 46 ist ebenfalls mit dem Steuergerät 44 verbunden.

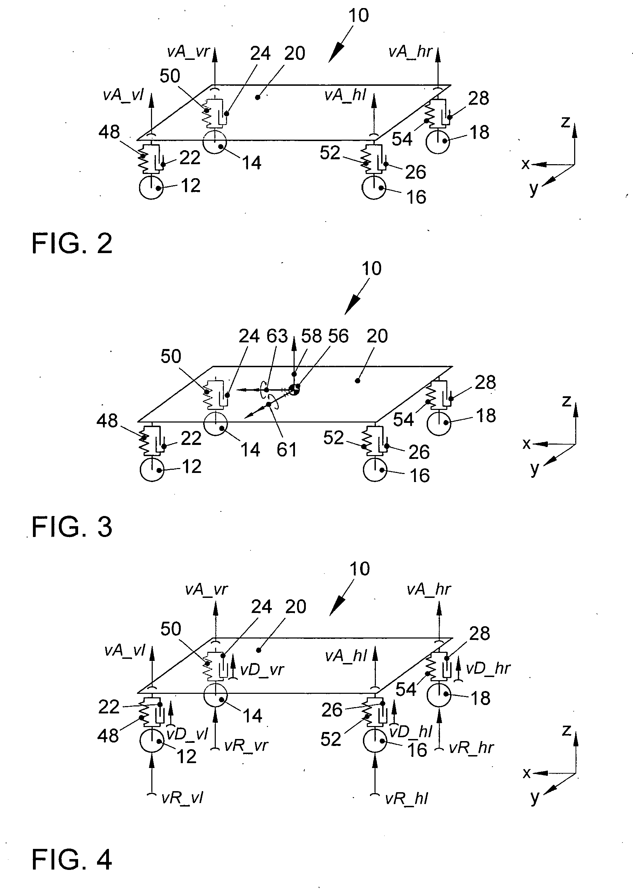

Figur 2 zeigt eine Prinzipskizze des Kraftfahrzeuges 10, wobei hier der Aufbau 20 als ebene Fläche angedeutet ist. An den Ecken des Aufbaus 20 sind jeweils die Räder 12, 14, 16 und 18 über eine Feder-Dämpfer-Kombination in an sich bekannter Art und Weise angeordnet. Die Feder-Dämpfer-Kombination besteht aus den Dämpfern 22, 24, 26 und 28 und jeweils parallel geschalteten Federn 48, 50, 52 und 54. An den Ecken des Aufbaus 20 sind die in Figur 1 dargestellten Beschleunigungssensoren 38, 40 beziehungsweise 42 angeordnet, mittels denen die vertikale Geschwindigkeit an den Ecken des Aufbaus 20 bestimmt werden kann. Hierbei handelt es sich um die Geschwindigkeiten vA_vl (Geschwindigkeit Aufbau vorne links), vA_vr (Geschwindigkeit Aufbau vorne rechts), vA_hl (Geschwindigkeit Aufbau hinten links) und vA_hr (Geschwindigkeit Aufbau hinten rechts). Die Geschwindigkeit kann aus den mittels der Beschleunigungssensoren gemessenen Beschleunigungen durch Integration errechnet werden.

Figur 3 zeigt wiederum die Prinzipskizze des Kraftfahrzeuges 10, wobei gleiche Teile wie in den vorhergehenden Figuren mit gleichen Bezugszeichen versehen und nicht nochmals erläutert sind. In einem Schwerpunkt 56 sind die Modalbewegungen des Aufbaus 20 verdeutlicht. Dies ist einerseits ein Hub 58 in vertikaler Richtung (z-Richtung), ein Nicken 61, das heißt eine Drehbewegung um eine in der y-Achse liegende Querachse, und ein Wanken 63, das heißt eine Drehbewegung um eine in der x-Achse liegende Längsachse des Kraftfahrzeuges 10.

Figur 4 zeigt eine weitere Prinzipskizze des Kraftfahrzeuges 10, wobei hier, in Ergänzung zu der Darstellung in Figur 2, weitere Signale dargestellt sind. Zusätzlich sind hier die Dämpfergeschwindigkeiten vD dargestellt, wobei vD_vl die Dämpfergeschwindigkeit für den Dämpfer 22 (vorne links), vD_vr die Dämpfergeschwindigkeit für den Dämpfer 24 (vorne rechts), vD_hl die Dämpfergeschwindigkeit für den Dämpfer 26 (hinten links) und vD_hr die Dämpfergeschwindigkeit für den Dämpfer 28 (hinten rechts) ist. Die Dämpfergeschwindigkeiten können über eine Differenzierung aus den Signalen der Wegsensoren 30, 32, 34 beziehungsweise 36 (Figur 1) ermittelt werden. In Figur 4 sind ferner die Radgeschwindigkeiten vR angedeutet. Hier steht Geschwindigkeit vR_vl für das Rad 12 (vorne links), vR_vr für das Rad 14 (vorne rechts), vR_hl für das Rad 16 (hinten links) und vR_hr für das Rad 18 (hinten rechts). Die Radgeschwindigkeiten vR können beispielsweise über Radbeschleunigungssensören ermittelt werden.

Da sowohl die Aufbaugeschwindigkeiten vA, die Dämpfergeschwindigkeiten vD und die Radgeschwindigkeiten vR alle den gleichen Richtungsvektor besitzen (in z-Richtung), besteht der Zusammenhang vD=vA-vR. Hierdurch müssen nicht alle Messgrößen in Form von Messsignalen vorliegen, sondern können aus den anderen Messgrößen errechnet werden.

Anhand der bisherigen Erläuterungen wird deutlich, dass es für eine effektive Regelung des Bewegungsablaufes des Aufbaus auf die Bereitstellung eines Stellstromes für das Steuermittel der Dämpfer ankommt. Nachfolgend wird auf die Bereitstellung dieses Stellstromes unter Berücksichtigung der Umsetzung der erfindungsgemäßen Lösungen näher eingegangen.

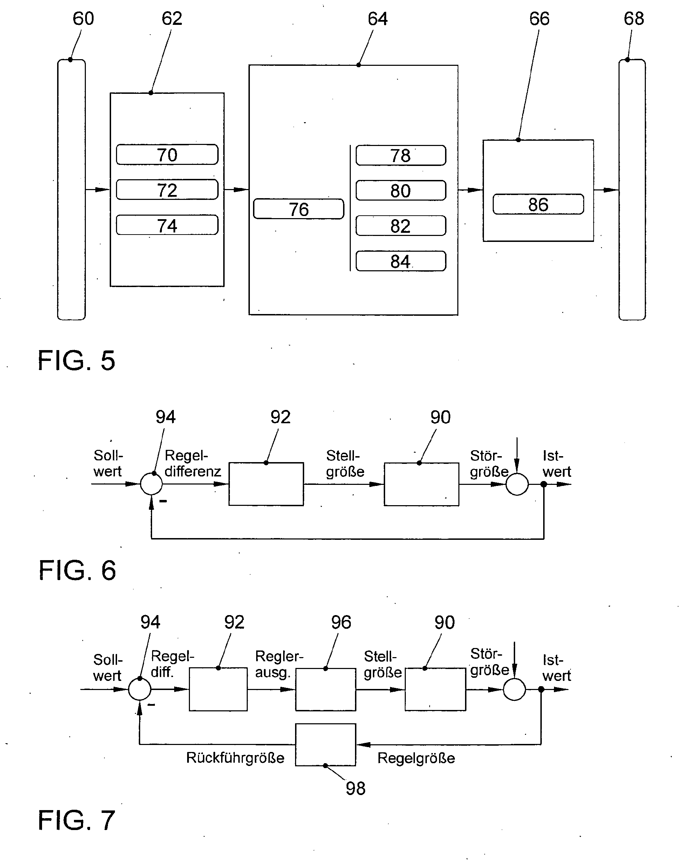

Figur 5 zeigt in einem Blockschaltbild eine Grobstruktur der Funktionsmodule zur erfindungsgemäßen Dämpferregelung. Die einzelnen Module sind aus Gründen der Übersichtlichkeit und Verständlichkeit gekapselt dargestellt. Die gesamte Struktur ist vorteilhafterweise hierarchisch über mehrere Ebenen aufgebaut. Die Funktionsmodule sind in einem Dämpferregler, vorzugsweise dem Steuergerät 44 (Figur 1) integriert. Die Dämpferregelung umfasst ein Signaleingangsmodul 60, ein Hilfsfunktionsmodul 62, ein Reglermodul 64, ein Auswertemodul 66 und ein Signalausgangsmodul 68. In dem Signaleingangsmodul 60 werden die Sensorsignale der Wegsensoren 30, 32, 34 beziehungsweise 36 und der Beschleunigungssensoren 38, 40 und 42 sowie weitere, über den CAN-Bus des Kraftfahrzeuges zur Verfügung stehende, Signale eingelesen. Das Hilfsfunktionsmodul 62 umfasst ein Man-Machine-Interfacemodul 70, ein Filtermodul 72 und ein Beladungserkennungsmodul 74.

Das Reglermodul 64 umfasst ein Straßenerkennungsmodul 76, ein Endlagendämpfungsmodul 78, ein Querdynamikmodul 80, ein Längsdynamikmodul 82 sowie ein Vertikaldynamikmodul 84. Das Auswertelogikmodul 66 umfasst ein Stromberechnungsmodul 86. Die Reglermodule 76, 78, 80, 82 und 84 generieren vorteilhafterweise einen Strom, oder eine Größe, die proportional zum Strom ist. Im Stromberechnungsmodul 86 findet die Stromberechnung aller Reglerausgangsgrößen zu Steuergrößen für die Dämpfer 22, 24, 26 beziehungsweise 28 statt. Über das Signalausgangsmodul 68 werden diese Stellströme den Dämpfern zur Verfügung gestellt. Sowohl das Signaleingangsmodul 60 als auch das Signalausgangsmodul 68 können optional selbstverständlich auch weitere Signale empfangen beziehungsweise ausgeben, je nach Ausstattung des betreffenden Kraftfahrzeuges.

In Figur 6 ist ein Standardregelkreis dargestellt. Dieser besteht aus einer Strecke 90, einem Regler 92 und einer negativen Rückkopplung der Regelgröße, das heißt des Istwertes auf dem Regler 92. Die Regeldifferenz wird aus der Differenz zwischen Sollwert (Führungsgröße) und Regelgröße berechnet. Die Stellgröße wirkt auf die Strecke 90 und damit auf die Regelgröße. Die Störgröße bewirkt eine, normalerweise unerwünschte, Veränderung der Regelgröße, die kompensiert werden muss. Die Eingangsgröße des Reglers 92 ist die Differenz aus dem gemessenen Istwert der Regelgröße und dem Sollwert. Der Sollwert wird auch als Führungsgröße bezeichnet, dessen Wert durch den gemessenen Istwert nachgebildet werden soll. Da der Istwert durch Störgrößen verändert werden kann, muss der Istwert dem Sollwert nachgeführt werden. Eine in einem Vergleicher 94 festgestellte Abweichung des Istwertes von dem Sollwert, die sogenannte Regeldifferenz, dient als Eingangsgröße für den Regler 92. Durch den Regler 92 wird festgelegt, wie das Regelungssystem auf die festgestellten Abweichungen reagiert, beispielsweise schnell, träge, proportional, integrierend oder dergleichen. Als Ausgangsgröße des Reglers 92 ergibt sich eine Stellgröße, welche auf eine Regelstrecke 90 Einfluss nimmt. Die Regelung dient hauptsächlich zur Beseitigung von Störgrößen, um diese auszuregeln.

In Figur 7 ist eine detailliertere Darstellung des Regelkreises gemäß Figur 6 dargestellt. Es ist ein erweiterter Regelkreis mit den zusätzlichen Elementen Stellglied 96 und Messglied 98 gezeigt. Im Beispiel der erfindungsgemäßen Dämpferregelung setzt sich die Stelleinrichtung beziehungsweise das Stellglied 96 aus einer elektronischen Komponente und einer elektro-hydraulischen Komponente zusammen. Die elektronische Komponente entspricht dem Stromregler im Steuergerät 44, während die elektro-hydraulische Komponente dem elektrisch ansteuerbaren Ventil der Dämpfer 22, 24, 26 beziehungsweise 28 entspricht. In den nachfolgenden Ausführungen sollen diese jedoch nicht weiter betrachtet werden. Diese werden als ideal angenommen beziehungsweise ihr Einfluss wird vernachlässigt. Somit stimmt idealisiert der Reglerausgang, der die Steuergröße liefert, mit der Stellgröße überein oder ist zu dieser zumindest proportional. Der Regler 92 gemäß Figur 15 ist hierbei aufgeteilt in den eigentlichen Regler 92 und das Stellglied 96. Der Regler 92 dient dazu, eine Größe zu bestimmen, mit der auf eine durch den Vergleicher 94 festgestellte Regeldifferenz über das Stellglied 96 reagiert werden soll. Das Stellglied 96 liefert die notwendige Energie in der geeigneten physikalischen Form, um auf den Prozess beziehungsweise die Regelstrecke einzuwirken. In dem Messglied 98 wird der Istwert gemessen. Die Störgröße kann bei einer Regelung der Bewegung eines Fahrzeugaufbaus 20 in Unebenheiten der Fahrbahn, seitlich wirkenden Kräften, wie beispielsweise Wind oder dergleichen, oder ähnlichen Einflüssen begründet sein.

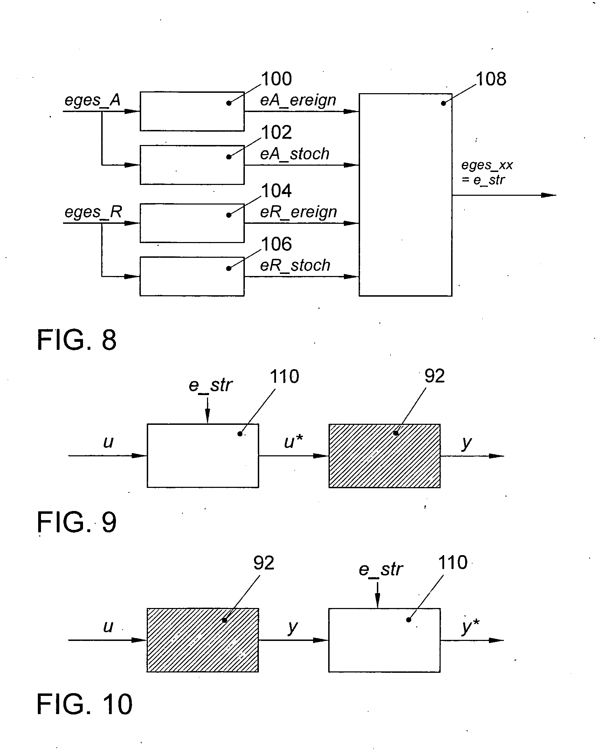

In Figur 8 ist gezeigt, wie die der gesamten Energie eines Körpers entsprechenden Eingangssignale in Filter (100 bis 106) eingegeben werden, die hieraus jeweils die beiden Anteile herausfiltern, welche stochastischen Ereignissen und Einzelereignissen zuzuordnen sind.

Hinsichtlich der Gewinnung der Signale welche sowohl die potenzielle als auch die kinetische Energie eines Körpers beschreiben ist folgendes festzuhalten:
Auf ein Fahrzeug hat als "externe Störgröße" insbesondere die Straße einen sehr großen Einfluss. Dieser geht so weit, dass die an sich aufgrund der Eigenfrequenzen bestimmten harmonischen Bewegungen eines Fahrzeugs durch die von der Straße aufgeprägten Zwangsanregungen dominiert werden. Zur effektiven Regelung eines Fahrzeugs ist daher der Einfluss der Straße eine sehr wichtige Größe.

Der vorliegende Ansatz geht davon aus, dass nicht primär die Straßengüte die relevante Größe ist sondern der sich aufgrund der Straßenanregung ergebende energetische Zustand des Systems und seiner einzelnen Komponenten. Dass heißt der "äußere" Straßenzustand wirkt sich auf jede Strecke anders aus und bewirkt so einen energetischen Zustand oder "inneren" Stra-. ßenzustand.

Dies ist auch für jeden Normalfahrer relativ einleuchtend, wenn er mit einem Fahrzeug der O-berklasse über eine Straße fährt, wird er einen ganz anderen Eindruck von der Straße gewinnen als wenn er mit einem Fahrzeug der Unterklasse unterwegs ist.

Auf diese Weise werden implizit die Eigenfrequenzen der Strecke, dass heißt des Fahrzeugs mit seinen einzelnen Körpern oder Massen (wie Aufbau, Rad, Dämpfer) berücksichtigt. Ferner findet eine Adaption auf Massenänderung, zum Beispiel aufgrund anderer Beladungszustände, automatisiert statt oder anders ausgedrückt die Zustandsgröße ist selbst-adaptierend.

Vorteilhaft ist ferner, dass unterschiedliche energetische Zustandsgrößen für die einzelnen Körper beziehungsweise Massen wie beispielsweise Aufbau, Rad oder Dämpfer bestimmbar sind als auch. Somit kann explizit festgestellt werden, welchen Einfluss eine Störgröße wie die Straßenanregung auf die unterschiedlichen Komponenten hat und es besteht die Möglichkeit, auf die unterschiedlichen Ausprägungen individuell zu reagieren.

Durch die Abbildung von Störgrößen in Form von energetischen Zustandsgrößen ist es möglich, über zustandsabhängige Regelungsverfahren diesen Einfluss zu berücksichtigen. Die Notwendigkeit von Störgrößenaufschaltung oder ähnlichen Verfahren entfällt somit.

Besonders vorteilhaft ist es nun, die gesamten energetischen Einflüsse zu berücksichtigen indem sowohl die potentiellen als auch die kinetischen Energien gebildet werden und diese zu einer Gesamtenergie zusammengefasst werden.

Dadurch wird außerdem eine Kontinuität der energetischen Zustandsgrößen erreicht, die zum Beispiel bei einer reinen Berücksichtigung von vR, wie bei herkömmlichen Verfahren, nur über zusätzliche Filter implementierbar ist, die sehr große Zeitverzüge aufweisen.

Das dem Aufbau des Fahrzeugs zugeordnete Eingangsignal eges_A wird durch zwei geeignete Filter 100, 102 aufgeteilt in ein erstes Ausgangssignal eA_ereign und ein zweites Ausgangssignal eA_stoch, was durch eine entsprechende Ausgestaltung der Filter 100, 102 geschehen kann, die aufgrund des relevanten Frequenzbandes die entsprechenden Signale durchlassen. Entsprechendes gilt für das die gesamte Energie des Rades beschreibende Eingangsignal e-ges_R, welches durch die beiden Filter 100, 102 in die Signale eR_ereign und eR_stoch aufgeteilt wird. Die Eingangsignale eges_A, eges_R können Ausgangssignale jeweils eines Kombinierers seien, welcher ihm zugeführte Eingangsignale in geeigneter Gewichtung miteinander kombiniert, welche aus der kinetischen und der potentiellen Energie resultieren, welche den jeweiligen Körper gerade innewohnen.

Die vier Ausgangssignale der Filter 100 bis 106 werden einem Kombinierer 108 zugeführt, der in geeigneter Weise die Eingangsignale hinsichtlich ihres gewünschten Einflusses auf die Regelung des Fahrzeuges gewichtet und dann ein Gesamtsignal eges_xx an seinem Ausgang abgibt, welches als e_str der betreffenden Regeleinrichtung zugeführt wird. Das den energetischen Einfluss der Straße auf die oben besprochenen Körper des Fahrzeugs beschreibende Signal eges_xx kann durch den Kombinierer 108 unterschiedlich ausgestaltet und an die verschiedenen Regler des Regelungssystems angepasst sein. In Figur 8 ist dies durch den Index xx angedeutet, der zum Beispiel für LD, QD, VD, EL, IB, FT (Längsdynamik, Querdynamik, Vertikaldynamik, Endlagen, Stromberechnung, Filter) stehen kann.

Die Figuren 9 und 10 zeigen, wie der festgestellte energetische Straßenzustand e_str sowohl auf die Eingangsgröße als auch als Ausgangsgröße eines Reglers 92 wirken kann. In Figur 9 wird eine Korrektureinrichtung 110 durch ein dem energetischen Straßenzustand e_str entsprechendes Signal beaufschlagt, so dass das Eingangssignal u in ein modifiziertes Ausgangssignal u* umgeformt wird, welches auf den Eingang des Reglers 92 wirkt, und damit dessen Ausgangssignal y beeinflusst.

In Figur 10 führt das Eingangsignal u am Regler 92 zu dessen Ausgangssignal y, welches dann in der Korrektureinrichtung 110 in Abhängigkeit von einem, dem energetischen Straßenzustand e_str entsprechenden Signal zu dem Signale y* modifiziert wird.

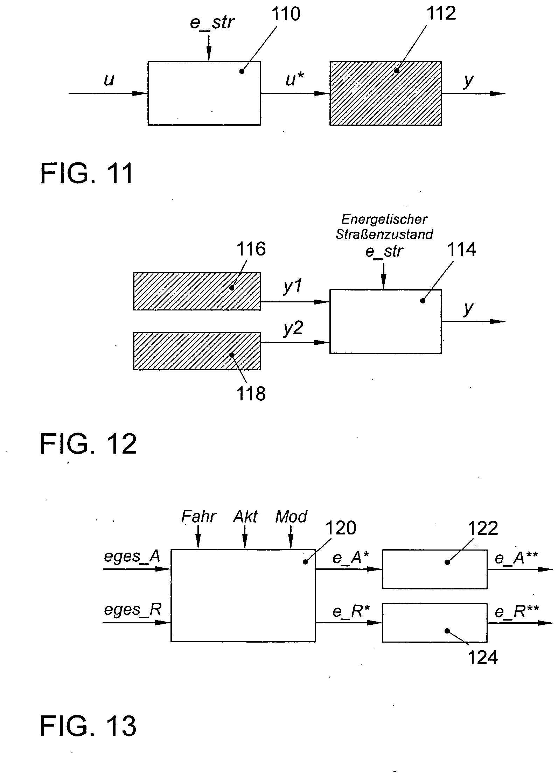

Figur 11 entspricht Figur 9 weit gehend, nur dass vor den nicht dargestellten Regler noch ein Filter 112 geschaltet ist, welches in der Lage ist, das Ausgangssignal u* der Korrektureinrichtung 110 zu bearbeiten. An den Filter 112 schließt sich dann der nicht dargestellten Regler 92 an, dessen Eingangsignal durch das Ausgangssignal des Filters 112 gebildet wird.

In Figur 12 ist dargestellt, dass ein Entscheider 114 in Abhängigkeit von einem dem energetischen Straßenzustand entsprechenden Signal e_str die beiden Ausgangssignale y1, y2 zweier Regler 116, 118 in geeigneter Weise kombiniert oder auswählt. Dabei kann beispielsweise die Regelung der Radbewegung der Regelung der Aufbaubewegung bevorzugt werden, wenn dies infolge des Signals e_str geboten erscheint.

Figur 13 zeigt die Möglichkeit, die Eingangsignale eges_A, eges_R nach Figur 8 vor einer Weiterverarbeitung in Abhängigkeit von anderen Parametern wie Fahrzustand Fahr(Längs-/Querdynamik), Fahreraktivität Akt (Gas, Bremse, Lenkung) oder Fahrweise Mod (sportlich/komfortabel) in einem Korrigierer 120 zu korrigieren wobei dann die entsprechenden Ausgangssignale e_A*, e_R* in Filtern 122, 124 bewertet und als Ausgangssignale e_A**, e_R* weiterverarbeitet werden.

Somit wird die Möglichkeit geschaffen, spezielle Ausprägungen der stochastischen und/oder Einzelereignis-Zustandsgrößen zu realisieren. Die Erfindung betrifft also ein Verfahren oder eine Regelungssystemkomponente zur Berücksichtung der Straßenanregung für ein Fahrzeug, wobei sowohl die stochastische Zusammensetzung wie auch die Einzelereignisse der Straße berücksichtigt werden.

### Bezugszeichenliste

- 10: Kraftfahrzeug
- 12: Rad
- 14: Rad
- 16: Rad
- 18: Rad
- 20: Aufbau
- 22: Dämpfer
- 24: Dämpfer
- 26: Dämpfer
- 28: Dämpfer
- 30: Wegsensor
- 32: Wegsensor
- 34: Wegsensor
- 36: Wegsensor
- 38: Beschleunigungssensoren
- 40: Beschleunigungssensoren
- 42: Beschleunigungssensoren
- 44: Steuergerät
- 46: Schaltmittel
- 48: Feder
- 50: Feder
- 52: Feder
- 54: Feder
- 56: Schwerpunkt
- 58: Hub
- 60: Signaleingangsmodul
- 61: Nicken
- 62: Hilfsfunktionsmodul
- 63: Wanken
- 64: Reglermodul
- 66: Signalausgangsmodul
- 68: Signalausgangsmodul
- 70: Man-Machine-Interfacemodul
- 72: Filtermodul
- 74: Beladungserkennungsmodul
- 76: Straßenerkennungsmodul
- 78: Endlagendämpfungsmoduls
- 80: Querdynamikmodul
- 82: Längsdynamikmodul
- 84: Vertikaldynamikmodul
- 86: Stromberechnungsmodul
- 90: Strecke
- 92: Regler
- 94: Vergleicher
- 96: Stellglied
- 98: Messglied
- 100: Filter
- 102: Filter
- 104: Filter
- 106: Filter
- 108: Kombinierer
- 110: Korrektureinrichtung
- 112: Filter
- 114: Entscheider.
- 116: Regler
- 118: Regler
- 120: Korrigierer
- 122: Filter
- 124: Filter

## Patentansprüche

1. Verfahren zur Erzeugung von Signalen zur Beeinflussung der Bewegung eines in seinen Bewegungsabläufen steuerbaren oder regelbaren Fahrzeugaufbaus (20) eines Kraftfahrzeuges (10), wobei sensorisch die Bewegung des Fahrzeugaufbaus (20) relativ zu wenigstens drei Rädern (12, 14, 16, 18) des Kraftfahrzeuges (10) und die vertikale Beschleunigung des Fahrzeugaufbaus (20) ermittelt wird, die den ermittelten Sensorwerten entsprechenden Sensorsignale werden einem Dämpferregler zugeführt und der Dämpferregler wenigstens ein Steuersignal zur Ansteuerung von Aktuatoren liefert, mittels denen die Bewegung des Fahrzeugaufbaus (20) beeinflusst werden kann, wobei der Einfluss einer Straßenanregung berücksichtigt wird, wobei stochastische Ereignisse und einzelne Ereignisse aus der Straßenanregung erfasst und ausgewertet werden, und die stochastischen Ereignisse und Einzelereignissen entsprechende Signale in die Ermittlung des wenigstens einen Steuersignals einfließen,
**dadurch gekennzeichnet, dass**
die stochastischen und Einzelereignis-Größen (eA_ereign, eA_stoch, eR_ereign, eR_stoch) in Form von energetischen Zustandsgrößen für den Fahrzeugaufbau (20) und das jeweilige Rad (12, 14, 16, 18) ermittelt werden, wobei die stochastischen und die Einzelereignis-Größen (eA_ereign, eA_stoch, eR_ereign, eR_stoch) für Fahrzeugaufbau (20) und Rad (12, 14, 16, 18) separat berechnet werden, wobei für die energetischen Zustandsgrößen sowohl die kinetische als auch die potentielle Energie ermittelt wird.

2. Verfahren nach Anspruch 1, **dadurch gekennzeichnet, dass** die energetischen Zustandsgrößen (eA_ereign, eA_stoch, eR_ereign, eR_stoch) als Eingangsgrößen und/oder Ausgangsgrößer und/oder Entscheidergrößen für nachfolgende Regelungen verwendet werden.

3. Verfahren nach einem der vorhergehenden Ansprüche, **dadurch gekennzeichnet, dass** Filter spezielle (Frequenz-)-Ausprägungen der energetischen Zustandsgrößen (eA_ereign, eA_stoch, eR_ereign, eR_stoch) ermöglichen.

4. Verfahren nach Anspruch 3, **dadurch gekennzeichnet, dass** es spezielle Ausprägungen für die Aufbaueigenfrequenz und/oder die Radeigenfrequenz gibt.

5. Verfahren nach einem der vorhergehenden Ansprüche, **dadurch gekennzeichnet, dass** für den Körper Aufbau (20) nur die Aufbaueigenfrequenz und für die Räder (12, 14, 16, 18) nur die Radeigenfrequenz über entsprechende Filterstrukturen berücksichtigt wird.

6. Verfahren nach einem der vorhergehenden Ansprüche, **dadurch gekennzeichnet, dass** die stochastischen und die Einzelereignis-Zustände der einzelnen Körper und/oder der einzelnen Frequenzbereiche zu einem Gesamtzustand zusammengefasst werden.

7. Verfahren nach einem der vorhergehenden Ansprüche, **dadurch gekennzeichnet, dass** wählbare Ausführungen der Zusammenfassungen der stochastische und Einzelereignis-Zustände für eine oder mehrere nachgeschaltete Reglermodule wie Vertikal-, Längs. Querdynamik oder Endlagen oder dergleichen erfolgen.

8. Verfahren nach einem der vorhergehenden Ansprüche, **dadurch gekennzeichnet, dass** weitere Eingangsgrößen beziehungsweise Zustandsgrößen verwendet werden wie Fahrzustand, Fahreraktivität, Fahrgeschwindigkeit, Fahrverhalten oder ähnliches.

9. Verfahren nach Anspruch 8, **dadurch gekennzeichnet, dass** diese weiteren Eingangsgrößen als Korrektur der Eingangsgrößen und/oder der Ausgangsgrößen diesen oder dass sie in der Filter- und/oder der Kombinationseinheit integriert werden.

10. System zur Beeinflussung der Bewegung eines in seinen Bewegungsabläufen steuerbaren oder regelbaren Fahrzeugaufbaus (20) eines Kraftfahrzeuges (10), mit Sensoren, welche die Bewegung des Fahrzeugaufbaus (20) erfassen, mit steuerbaren oder regelbaren Aktuatoren die zwischen dem Fahrzeugaufbau (20) und den Fahrzeugrädern (12, 14, 16, 18) angeordnet sind, mit einem Dämpferregler, mittels dem die Sensorsignale verarbeitet werden und wenigstens ein Ansteuersignal für die Aktuatoren bereitgestellt wird, wobei der Dämpferregler Regelungsmodule umfasst, mittels denen aus den Sensorsignalen stochastische Ereignisse und Einzelereignisse erfassbar sind, und die dem stochastischen Ereignis und Einzelereignis entsprechendes Signal bei der Ermittlung des wenigstens einen Steuersignals berücksichtigbar sind,
**dadurch gekennzeichnet, dass**
das System derart ausgebildet ist, dass die stochastischen und Einzelereignis-Größen (eA_ereign, eA_stoch, eR_ereign, eR_stoch) in Form von energetischen Zustandsgrößen für den Fahrzeugaufbau (20) und das jeweilige Rad (12, 14, 16, 18) ermittelt werden, wobei die stochastischen und die Einzelereignis-Größen (eA_ereign, eA_stoch, eR_ereign, eR_stoch) für Fahrzeugaufbau (20) und Rad (12, 14, 16, 18) separat berechnet werden, wobei für die energetischen Zustandsgrößen sowohl die kinetische als auch die potentielle Energie ermittelt wird.

11. Fahrzeug, insbesondere Kraftfahrzeug, mit einem System zur Beeinflussung der Bewegung eines in seinen Bewegungsabläufen steuerbaren oder regelbaren Fahrzeugaufbaus nach Anspruch 10.

## Claims

1. Method for generating signals for influencing the movement of a vehicle body (20), whose movement sequences can be open-loop or closed-loop controlled, of a motor vehicle (10), wherein the movement of the vehicle body (20) relative to at least three wheels (12, 14, 16, 18) of the motor vehicle (10) and the vertical acceleration of the vehicle body (20) are determined by sensor, the sensor signals which correspond to the determined sensor values are fed to a damper controller, and the damper controller supplies at least one control signal for actuating actuators by means of which the movement of the vehicle body (20) can be influenced, wherein the influence of road excitation is taken into account, wherein stochastic events and individual events are detected from the road excitation and evaluated, and the signals corresponding to stochastic events and individual events are included in the determination of the at least one control signal,
**characterized in that**
the stochastic and individual event variables (eA_ereign, eA_stoc, eR_ereign, eR_stoc) are determined in the form of energetic state variables for the vehicle body (20) and the respective wheel (12, 14, 16, 18), wherein the stochastic and the individual event variables (eA_ereign, eA_stoc, eR_ereign, eR_stoc) for the vehicle body (20) and wheel (12, 14, 16, 18) are calculated separately, wherein both the kinetic and the potential energy are determined for the energetic state variables.

2. Method according to Claim 1, **characterized in that** the energetic state variables (eA_ereign, eA_stoc, eR_ereign, eR_stoc) are used as input variables and/or output variables and/or decision variables for subsequent control processes.

3. Method according to one of the preceding claims,
**characterized in that** filters permit specific (frequency) implementations of the energetic state variables (eA_ereign, eA_stoc, eR_ereign, eR_stoc).

4. Method according to Claim 3, **characterized in that** there are specific implementations for the natural frequency of the vehicle body and/or the natural frequency of the wheels.

5. Method according to one of the preceding claims,
**characterized in that** only the natural frequency for the vehicle body is taken into account for the vehicle body (20), and only the natural frequency of the wheels is taken into account for the wheels (12, 14, 16, 18), by means of corresponding filter structures.

6. Method according to one of the preceding claims,
**characterized in that** the stochastic and the individual event states of the individual bodies and/or the individual frequency ranges are combined to form an overall state.

7. Method according to one of the preceding claims,
**characterized in that** selectable embodiments of the combinations of the stochastic states and individual event states are implemented for one or more controller modules which are connected downstream, such as vertical dynamics, longitudinal dynamics, lateral dynamics or end positions or the like.

8. Method according to one of the preceding claims,
**characterized in that** further input variables or state variables are used such as the driving state, driver activity, velocity, driving behaviour or the like.

9. Method according to Claim 8, **characterized in that** these further input variables serve as a correction of the input variables and/or of the output variables, or **in that** they are integrated into the filter unit and/or the combination unit.

10. System for influencing the movement of a vehicle body (20), whose movement sequences can be open-loop or closed-loop controlled, of a motor vehicle (10), with sensors which detect the movement of the vehicle body (20), with actuators which can be open-loop or closed-loop controlled and are arranged between the vehicle body (20) and the vehicle wheels (12, 14, 16, 18), with a damper controller by means of which the sensor signals are processed, and at least one actuation signal is made available for the actuators, wherein the damper controller comprises control modules by means of which stochastic events and individual events can be acquired from the sensor signals, and the signal which corresponds to the stochastic event and the individual event can be taken into account during the determination of the at least one control signal,
**characterized in that**
the system is embodied in such a way that the stochastic and individual event variables (eA_ereign, eA_stoc, eR_ereign, eR_stoc) are determined in the form of energetic state variables for the vehicle body (20) and the respective wheel (12, 14, 16, 18), wherein the stochastic and the individual event variables (eA_ereign, eA_stoc, eR_ereign, eR_stoc) are calculated separately for the vehicle body (20) and wheel (12, 14, 16, 18), wherein both the kinetic and the potential energy are determined for the energetic state variables.

11. Vehicle, in particular a motor vehicle, having a system for influencing the movement of a vehicle body, whose movement sequences can be open-loop or closed-loop controlled, according to Claim 10.

## Revendications

1. Procédé pour générer des signaux destinés à influencer le mouvement d'une carrosserie de véhicule (20), dont le déroulement des mouvements peut être commandé ou régulé, d'un véhicule automobile (10), le mouvement de la carrosserie de véhicule (20) par rapport à au moins trois roues (12, 14, 16, 18) du véhicule automobile (10) ainsi que l'accélération verticale de la carrosserie de véhicule (20) étant déterminés par un système de détection, les signaux de capteur correspondant aux valeurs de capteur déterminées étant acheminés à un régulateur d'amortisseur et le régulateur d'amortisseur délivrant au moins un signal de commande destiné à commander des actionneurs au moyen desquels le mouvement de la carrosserie de véhicule (20) peut être influencé, l'influence d'une stimulation par la route étant prise en compte, des événements stochastiques et des événements individuels étant détectée à partir de la stimulation par la route puis interprétés, et des signaux correspondant aux événements stochastiques et aux événements individuels intervenant dans la détermination de l'au moins un signal de commande, **caractérisé en ce que**
les grandeurs d'événement stochastique et individuel (eA_ereign, eA_stoch, eR_ereign, eR_stoch) sont déterminées sous la forme de grandeurs d'état énergétiques pour la carrosserie de véhicule (20) et la roue (12, 14, 16, 18) correspondante, les grandeurs d'événement stochastique et individuel (eA_ereign, eA_stoch, eR_ereign, eR_stoch) étant calculées séparément pour la carrosserie de véhicule (20) et la roue (12, 14, 16, 18), l'énergie cinétique et l'énergie potentielle étant toutes deux déterminées pour les grandeurs d'état énergétiques.

2. Procédé selon la revendication 1, **caractérisé en ce que** les grandeurs d'état énergétiques (eA_ereign, eA_stoch, eR_ereign, eR_stoch) sont utilisées comme grandeurs d'entrée et/ou grandeurs de sortie pour les régulations qui suivent.

3. Procédé selon l'une des revendications précédentes, **caractérisé en ce que** des filtres permettent des expressions (de fréquence) spéciales des grandeurs d'entrée de l'unité de calcul des grandeurs d'état énergétiques.

4. Procédé selon la revendication 3, **caractérisé en ce qu'**il existe des expressions spéciales pour la fréquence propre de la carrosserie et/ou la fréquence propre des roues.

5. Procédé selon l'une des revendications précédentes, **caractérisé en ce que** seules sont prises en compte, par le biais de structures de filtrage spéciales, la fréquence propre de la carrosserie pour le corps carrosserie (20) et la fréquence propre des roues pour les roues (12, 14, 16, 18).

6. Procédé selon l'une des revendications précédentes, **caractérisé en ce que** les états d'événement stochastique et individuel des corps individuels et/ou des plages de fréquences individuelles sont regroupés en un état global.

7. Procédé selon l'une des revendications précédentes, **caractérisé en ce que** des exécutions sélectionnables des regroupements des états d'événement stochastique et individuel sont effectuées pour un ou plusieurs modules de régulation branchés en aval, comme de la dynamique verticale, longitudinale, transversale ou des positions finales.

8. Procédé selon l'une des revendications précédentes, **caractérisé en ce que** des grandeurs d'entrée supplémentaires ou des grandeurs d'état sont utilisées, comme l'état de la conduite, l'activité du conducteur, la vitesse de déplacement, le comportement de conduite ou similaire.

9. Procédé selon la revendication 8, **caractérisé en ce que** ces grandeurs d'entrée supplémentaires servent de correction des grandeurs d'entrée et/ou des grandeurs de sortie ou **en ce qu'**elles sont intégrées dans l'unité de filtrage et/ou de combinaison.

10. Système pour influencer le mouvement d'une carrosserie de véhicule (20), dont le déroulement des mouvements peut être commandé ou régulé, d'un véhicule automobile (10), comprenant des capteurs qui détectent le mouvement de la carrosserie de véhicule (20), comprenant des actionneurs qui sont disposés entre la carrosserie de véhicule (20) et les roues de véhicule (12, 14, 16, 18), comprenant un régulateur d'amortisseurs au moyen duquel sont traités les signaux de capteur et est délivré au moins un signal de commande pour les actionneurs, le régulateur d'amortisseur comportant des modules de régulation au moyen desquels des événements stochastiques et des événements individuels peuvent être détectés à partir des signaux de capteur, et les signaux correspondant aux événements stochastiques et aux événements individuels pouvant être pris en compte lors de la détermination de l'au moins un signal de commande, **caractérisé en ce que**
le système est configuré de telle sorte que les grandeurs d'événement stochastique et individuel (eA_ereign, eA_stoch, eR_ereign, eR_stoch) sont déterminées sous la forme de grandeurs d'état énergétiques pour la carrosserie de véhicule (20) et la roue (12, 14, 16, 18) correspondante, les grandeurs d'événement stochastique et individuel (eA_ereign, eA_stoch, eR_ereign, eR_stoch) étant calculées séparément pour la carrosserie de véhicule (20) et la roue (12, 14, 16, 18), l'énergie cinétique et l'énergie potentielle étant toutes deux déterminées pour les grandeurs d'état énergétiques.

11. Véhicule, notamment véhicule automobile, équipé d'un système selon la revendication 10 pour influencer le mouvement d'une carrosserie de véhicule dont le déroulement des mouvements peut être commandé ou régulé.
